# EUROPEAN PATENT APPLICATION

(11) **EP 4 312 060 A1**
(43) Date of publication of application: **31.01.2024**
(21) Application number: 22186852.4
(22) Date of filing: 26.07.2022
(51) Int. Cl.: G01S 17/86, G01N 21/63, G01S 17/06

(54) **MATERIAL SENSITIVE LIDAR**

(71) Applicant: Nokia Technologies Oy, 02610 Espoo (FI)
(72) Inventor: Samanta, Bibek, New Providence, 07974 (US)
(74) Representative: Swindell & Pearson Limited

(57) **Abstract**

An apparatus for making distance measurements and inferring material composition. The apparatus comprises a tunable light source configured to provide pulses of light for exciting a sample so as to cause surface deformation of, at least part of, a surface of the sample and also a LiDAR device configured to provide LiDAR signals and detect a distance between the apparatus and the surface of the sample. The LiDAR device is configured to detect the surface deformation caused by the tunable light source from LiDAR signals that are reflected from the surface of the sample. The apparatus enables the detected surface deformation to be used to infer a material composition of at least a part of the surface of the sample.

## Description

### TECHNOLOGICAL FIELD

Examples of the disclosure relate to material sensitive LiDAR. Some relate to using LiDAR devices to determine both a distance to a sample and a material composition of the sample.

### BACKGROUND

LiDAR devices can be used to map three-dimensional environments. The LiDAR devices can be used to determine the distances between objects within an environment. LiDAR can be used for functions such as ranging and proximity sensing in autonomous navigation tasks and many other functions.

### BRIEF SUMMARY

According to various, but not necessarily all, examples of the disclosure there is provided an apparatus comprising:
a tunable light source configured to provide pulses of light for exciting a sample so as to cause surface deformation of, at least part of, a surface of the sample;
a LiDAR device configured to provide LiDAR signals and detect a distance between the apparatus and the surface of the sample; and
wherein the LiDAR device is configured to detect the surface deformation caused by the tunable light source from LiDAR signals that are reflected from the surface of the sample and wherein the apparatus enables the detected surface deformation to be used to infer a material composition of at least a part of the surface of the sample.

The LiDAR device may be configured to simultaneously detect the distance between the apparatus and the surface of the apparatus and the surface deformation.

The LiDAR device may comprise an interferometric assembly configured to detect surface deformation from a relative phase shift of LiDAR signals that are reflected from the surface of the sample.

The apparatus may be configured to enable a modulation frequency of the tunable light source to be used to filter relative phase shifts in the LiDAR signals that are reflected from the surface of the sample.

Phase stabilization of the LiDAR device may be achieved using one or more of:
tuning of a Bragg reflector or ring resonator,
programmable laser cavity phase shifting,
a fiber Bragg grating,
a Fabry-Perot resonator,
a Mach-Zehnder interferometer.

The LiDAR device may comprise an interferometric assembly configured to detect surface deformation from speckle modulations in light intensity reflected from the sample.

The LiDAR device may be configured to provide time-multiplexed signals for detecting the distance between the apparatus and the surface of the sample and the surface deformation.

The LiDAR device may comprise a frequency modulated continuous wave LiDAR device.

The tunable light source may be configured to provide infra-red light.

The tunable light source may comprise a quantum cascade laser.

The tunable light source may be configured for photothermal absorption by the surface of the sample.

The pulses of light may be timed so as to allow thermal expansion and contraction of the surface of the sample between consecutive pulses of the tunable light source.

The apparatus may comprise means for converting detected LiDAR signals from a time domain to a frequency domain to detect the surface deformation.

According to various, but not necessarily all, examples of the disclosure there may be provided a method comprising:
controlling a tunable light source to provide pulses of light to excite a sample so as to cause surface deformation of, at least part of, a surface of the sample;
controlling a LiDAR device to provide LiDAR signals and detect a distance between the apparatus and the surface of the sample;
detecting the surface deformation caused by the tunable light source from LiDAR signals that are reflected from the surface of the sample; and
enabling the detected surface deformation to be used to infer a material composition of at least a part of the surface of the sample.

According to various, but not necessarily all, examples of the disclosure there may be provided a computer program comprising computer program instructions that, when executed by processing circuitry, cause:
controlling a tunable light source to provide pulses of light to excite a sample so as to cause surface deformation of, at least part of, a surface of the sample;
controlling a LiDAR device to provide LiDAR signals and detect a distance between the apparatus and the surface of the sample;
detecting the surface deformation caused by the tunable light source from LiDAR signals that are reflected from the surface of the sample; and
enabling the detected surface deformation to be used to infer a material composition of at least a part of the surface of the sample.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows an example apparatus;
FIG. 2 shows an example method;
FIG. 3 shows an example apparatus;
FIGS. 4A to 4E show an example analysis of a sample;
FIGS. 5A to 5C show an example apparatus;
FIGS. 6A to 6E show an example apparatus and outputs;
FIG. 7 shows results obtained using examples of the disclosure; and
FIG. 8 shows an example controller.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DETAILED DESCRIPTION

In examples of the disclosure a LiDAR device can be used to determine both range information and also information about the material composition of an object. This can be achieved by exciting the object, or part of the object, with a laser or other tunable light source. The excitation can be tuned to cause surface deformation of the object. The amount of surface deformation and the wavelength of light that causes the deformation can be used to infer information about the material composition of the object. The LiDAR device can be used to detect this surface deformation and also the distance to the object.

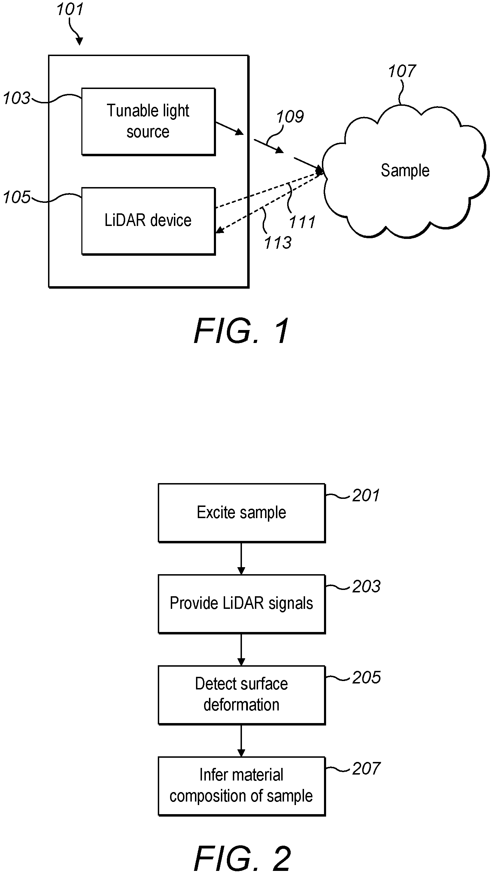

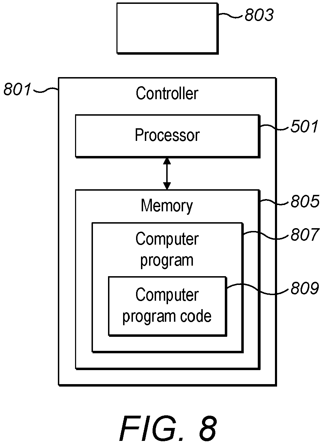

Fig. 1 schematically shows an example apparatus 101 according to examples of the disclosure. In the example of Fig. 1 the apparatus 101 comprises a tunable light source 103 and a LiDAR device 105. The apparatus 101 could comprise other components that are not shown in Fig. 1. For example, the apparatus 101 could comprise a controller for the apparatus 101 and/or other components. An example controller is shown in Fig. 8.

The apparatus 101 in Fig. 1 is configured to analyse a sample 107. In examples of the disclosure the apparatus 101 can be used to determine both a distance between the sample 107 and the apparatus 101 and also to determine information relating to a material composition of the sample 107.

The tunable light source 103 can comprise any light source that can be configured to provide pulses of light 109 for exciting a sample 107. In some examples the tunable light source 103 can comprise a laser such as a quantum cascade laser.

The tunable light source 103 can be configured to provide pulses of light 109 in any suitable range of wavelengths. In some examples the tunable light source 103 can be configured to provide light within the infra-red range. In some examples the tunable light source 103 can be configured to provide pulses of light 109 within the mid infrared range. The wavelength range that is selected for the tunable light source 103 can be selected based on the types of samples that are likely to be analysed by the apparatus 101.

The tunable light source 103 is tunable so that the wavelength of pulses of light 109 can be adjusted. The tunable light source 103 can be configured so that the wavelength of pulses of light 109 can be swept through a range of wavelengths.

The pulses of light 109 can be configured to cause surface deformation of, at least part of, a surface of the sample 107. The pulses of light 109 can be configured by controlling the wavelength, the intensity, the area of the sample 107 in which the pulses of light 109 are incident, and/or any other suitable parameters. The tunable light source 103 can be configured to cause photothermal absorption by the surface of the sample 107. The pulses of light 109 can cause photothermal excitation of, at least part of, a surface of the sample 107. The pulses of light 109, at the appropriate frequency, can be absorbed by the molecular structures within the sample 107. The pulses of light 109, when tuned to an appropriate frequency, can cause resonant vibrations of molecular or lattice structures within the sample 107. This creates a surface deformation that can be used to infer information about the molecular composition of the sample 107.

The tunable light source 103 can be configured to provide pulses of light 109 at any suitable intervals. In some examples the tunable light source 103 can be configured so that the pulses of light 109 are timed so as to allow thermal expansion and relaxation of the surface of the sample 107 between consecutive pulses of the tunable light source 103.

The apparatus 101 also comprises a LiDAR device 105. The LiDAR device 105 can comprise any means that can be configured to use LiDAR signals to measure one or more samples 107. The LiDAR device 105 can be configured to detect the distance and position of one or more samples 107, to identify one or more samples 107, and/or for any other suitable purpose. In examples of the disclosure the LiDAR device 105 is also configured to enable information about the material composition of a sample 107 to be determined.

The LiDAR device 105 can be configured to transmit LiDAR signals 111 to the sample 107. LiDAR signals 111 that are incident on the surface of the sample 107 can be reflected by the surface of the sample 111 to provide reflected LiDAR signals 113. The LiDAR device 105 is configured to detect the reflected LiDAR signals 113 and use the reflected LiDAR signals 113 to detect a distance between the apparatus 101 and the surface of the sample 107.

The LiDAR signals 111 that are transmitted by the LiDAR device 105 can comprise any suitable type of signal. In some examples the LiDAR signals 111 can comprise a signal in the infra-red range. In some examples the LiDAR signals 111 could comprise a dot pattern that is projected onto the sample 107. In some examples the LiDAR signals 111 could comprise a beam that is scanned over the surface, or at least part of the surface, of the sample 107.

The LiDAR device 105 can be configured to detect the surface deformation of the sample 107. The surface deformation of the sample 107 that is caused by the pulses of light 109 can be in the range of tens of nanometers. The LiDAR device 105 can be configured to detect displacements at this scale.

The LiDAR device 105 can be configured to detect the surface deformation from any suitable parameter of the reflected LiDAR signal113. In some cases the LiDAR device 105 can be configured to detect the surface deformation from a phase of the reflected LiDAR signal 113. In such cases the LiDAR device 105 can comprise means for detecting a phase shift. For example, the LiDAR device 105 can comprise an interferometric assembly, or any other suitable means, configured to detect surface deformation from a relative phase shift of LiDAR signals that are reflected from the surface of the sample 107.

The LiDAR device 105 can also be configured to filter the relative phase shifts of the reflected LiDAR signals 113. Any suitable means could be used to perform the filtering. For instance, the apparatus 101 can be configured to enable a modulation frequency of the tunable light source 103 to be used to filter relative phase shifts in the reflected LiDAR signals 113.

In some examples the LiDAR device 105 can comprise means for stabilizing the phase of the LiDAR device 105 so as to enable the phase shift in the reflected LiDAR signals 113 to be used to detect the surface deformations. The phase stabilization of the LiDAR device 105 can be achieved using any suitable means such as tuning of a Bragg reflector or ring resonator, programmable laser cavity phase shifting, a fiber Bragg grating, a Fabry-Perot resonator, a Mach-Zehnder interferometer.

Parameters other than phase can be used to detect the surface deformation in some examples. In some cases the LiDAR device 105 can be configured to detect speckle modulations in light intensity in the reflected LiDAR signal 113 caused due to the time-varying surface deformations. In such cases the LiDAR device 105 can comprise an interferometric assembly, or any other suitable means, configured to detect surface deformation from speckle modulations in the reflected LiDAR signals 113. Other means for detecting the surface deformation could be used in other examples.

The LiDAR device 105 can be configured to provide time-multiplexed signals for detecting the distance between the apparatus 101 and the surface of the sample 107 and the surface deformation of the sample 107.

In some examples the LiDAR device 105 could be a Frequency Modulated Continuous Wave (FMCW) laser. Other types of LiDAR device 105 could be used in other examples.

As shown in Fig. 1 the apparatus 101 can be configured so that the LiDAR signals 111 can be incident upon a region of the surface of the sample 107 that has been excited by the pulses of light 109. The reflected LiDAR signals 113 therefore comprise information about the distance between the apparatus 101 and the sample 107 and also the surface deformations caused by the pulses of light 109 from the tunable light source 103. The information about the surface deformations can be used to infer a material composition of at least a part of the surface of the sample 107.

The sample 107 can comprise any suitable type of sample 107. In some examples the sample 107 could be a living sample such as a person or an animal. In some examples the sample could comprise an inanimate object such as walls or objects within a room. The sample 107 could be a solid or a liquid or any other suitable type of sample with a surface.

The sample 107 can be positioned in any suitable location relative to the apparatus 101. For example, the sample 107 can be positioned so that both the pulses of light 109 from the tunable light source 103 and the LiDAR signal 111 from the LiDAR device 105 can be incident on, at least part of, the surface of the sample 107. The distance at which the sample 107 can be positioned relative to the apparatus 101 can depend upon the power of the LiDAR signal 111 and any other suitable factor. In some examples the sample 107 could be positioned within a range of tens of meters of the apparatus 101. In some examples the object 107 could be positioned in the range of 100 meters away.

Fig. 2 shows an example method according to examples of the disclosure. The example method could be implemented using the apparatus 101 of Fig. 1 or any other suitable apparatus 101.

The method comprises, at block 201, controlling a tunable light source 103 to provide pulses of light 109. The pulses of light 109 are configured to excite a sample 107 so as to cause surface deformation of, at least part of, a surface of the sample 107. The pulses of light 109 can be configured to excite a sample 107 by positioning the tunable light source 103 relative to the sample 107 so that the pulses of light 109 are incident on an appropriate part of the sample 107. The pulses of light 109 can be configured to excite a sample 107 by controlling the wavelength of the pulses of light 109, the intensity of the pulses of light 109, and/or any other suitable parameter.

The pulses of light 109 can cause photothermal absorption of by the surface of the sample 107. This causes localized heating of the surface of the sample 107. In some examples the localized heating could increase the local temperature by around 4°C. The actual temperature change will be dependent upon the type of sample 107, the intensity of the pulse of light 109, an/or any other suitable factors. The pulses of light 109 cause resonant vibrations of a molecular structure within the sample 107. The light source 103 is tunable so that the resonant mode of specific molecular structures can be identified. This information can be used to infer information about the material composition of the sample 107.

At block 203 the method comprises controlling a LiDAR device 105 to provide LiDAR signals 111. The LiDAR signals 111 can be transmitted so that they are incident on the sample 107. The reflected LiDAR signals 113 can then be detected by the LiDAR device 105 and used to detect a distance between the apparatus 101 and the surface of the sample 107.

In examples of the disclosure the apparatus 101 can be configured so that the LiDAR signals 111 are incident on the same area of the sample 107 that has been excited by the pulse of light 109. This can enable the surface deformation caused by the pulses of light 109 to be detected by the reflected LiDAR signals 113.

At block 205 the method comprises using the reflected LiDAR signals 113 to detect the surface deformation caused by the pulses of light 109 from the tunable light source 103.

Any suitable parameter in the reflected LiDAR signals 113 can be used to detect the surface deformations. In some examples the phases of respective reflected LiDAR signals 113 can be used. This information can be used with information about the frequency of the pulses of light 109 that cause the surface deformation. In some examples information about the intensity of patterns such as speckle patterns, in the reflected LiDAR signals 113 can be detected and used to determine the surface deformations. Other parameters could be used in other examples.

At block 207 the method comprises enabling the detected surface deformation to be used to infer a material composition of at least a part of the surface of the sample 107. The inference can be made from the magnitude of the surface deformations and the frequency of the pulses of light 109 that caused the surface deformations. This can give an indication of the types of molecular structure within the sample 107 which can be used to infer the material composition of, at least part of, the sample.

In some examples the apparatus 101 can be configured to use the detected surface deformations to infer the material composition of the sample 107. For instance, the apparatus 101 could comprise a processor and/or controller that can be configured to use the data relating to the surface deformations that has been obtained by the LiDAR device 105 to infer information about the material within the sample 107. In such examples the apparatus 101 could comprise means for processing the signals obtained by the LiDAR device 105 into any suitable format to enable them to be processed to infer the information about the material composition of the sample. For instance, the apparatus 101 could comprise means for converting detected LiDAR signals from a time domain to a frequency domain to detect the surface deformation. The means could comprise a filterbank or any other suitable means.

In some examples the data relating to the surface deformations that has been obtained by the LiDAR device 105 can be transmitted to a different device or entity to enable the different device or entity to infer information about the material within the sample 107. In such examples the apparatus 101 could comprise means for processing the signals obtained by the LiDAR device 105 into any suitable format to enable them to be transmitted to another entity for the analysis.

The blocks shown in Fig. 2 can be performed in any suitable order. In some examples blocks 203, and 205 can be performed simultaneously. That is, in some examples the LiDAR device 105 can be configured to simultaneously detect the distance between the apparatus 101 and the surface of the sample 107 and the surface deformation. In other examples the respective detections could be performed sequentially, that is one could be detected after the other.

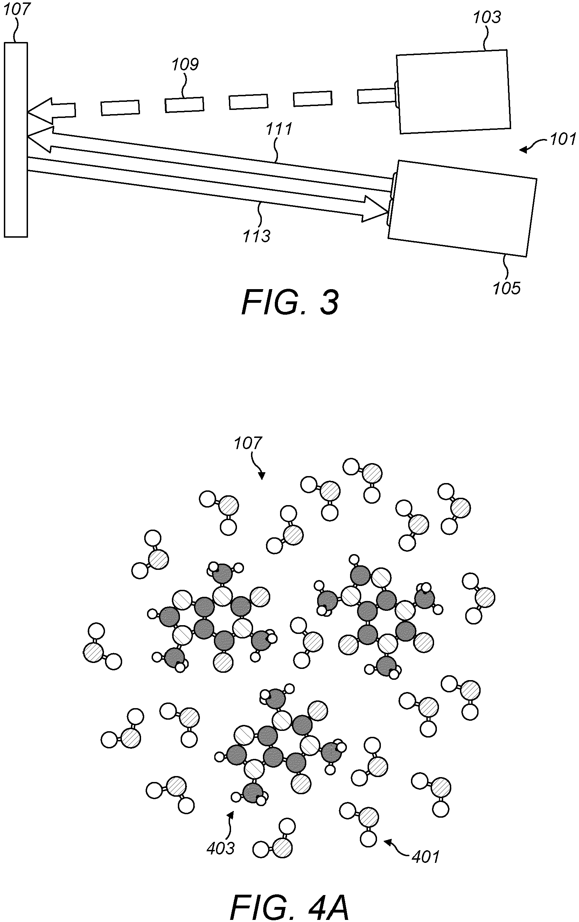

Fig. 3 shows an example apparatus; 101. The apparatus 101 comprises a tunable light source 103 and a LiDAR device 105 and is configured to analyse a sample 107. The tunable light source 103 and the LiDAR device 105 and the sample 107 can be as shown in Fig.1. Corresponding reference numerals are used for corresponding features.

In the example of Fig. 3 the tunable light source 103 comprises a quantum cascade laser. Other types of tunable light source 103 could be used in other examples.

The tunable light source 103 is configured to provide light in the infrared range. Other wavelengths of light could be used in other examples.

In the example of Fig. 3 the LiDAR device 105 comprises a solid-state laser. The solid-state laser can be configured to provide the LiDAR signals 111. The LiDAR signals 111 are used to probe the sample 107. Other means for providing the LiDAR signals 111 can be used in other examples.

In some examples the LiDAR device 105 could comprise an FMCW LiDAR device 105. Such devices can be suitable for use because they are low powered compared to other types of LiDAR devices 105. This could make examples of the disclosure suitable for use in handheld devices such as mobile phones, or other devices with limited power supply.

The FMCW LiDAR device 105 also uses LiDAR signals 111 at a wavelength and intensity that do not cause damage to the eyes of people using the apparatus 101 or in the vicinity of the apparatus 101. This can make the apparatus 101 suitable for use in applications where there might be people, or animals, in the vicinity of the apparatus 101.

The LiDAR device 105 can be configured to detect the distance between the LiDAR device 105 and the sample 107 and the surface deformations of the sample 107 caused by the pulses of light 109. The same LiDAR signals 111 and reflected LiDAR signals 113 can be used to determine both the distance between the LiDAR device 105 and the sample 107 and the surface deformations of the sample 107. The LiDAR device 105 can be configured to use the same LiDAR signals 111 and reflected LiDAR signals to detect the movement of the surface of the sample 107 and also movement of the sample 107 itself. The movement of the sample 107 could be a change in position and/or orientation of the sample 107 relative to the apparatus 101.

The example apparatus 101 of Fig. 3 can have high sensitivity to enable the surface deformation caused by molecular vibrations to be detected. Th high sensitivity can be obtained by using phase stable LiDAR signals 111 or any other suitable means.

The example apparatus 101 of Fig. 3 can enable these surface deformations to be detected at a long range. The long range can be over ten meters between the sample 107 and the LiDAR device 105. In some examples the long range could be up to 100 meters.

Figs. 4A to 4E shows an example of a sample 107 being analysed.

Fig. 4A shows an example sample 107. In this case the sample 107 comprises a liquid. The sample 107 is coffee and comprises water 401 and caffeine 403. The sample 107 could also comprise other molecules that are not shown in the example of Fig. 4A.

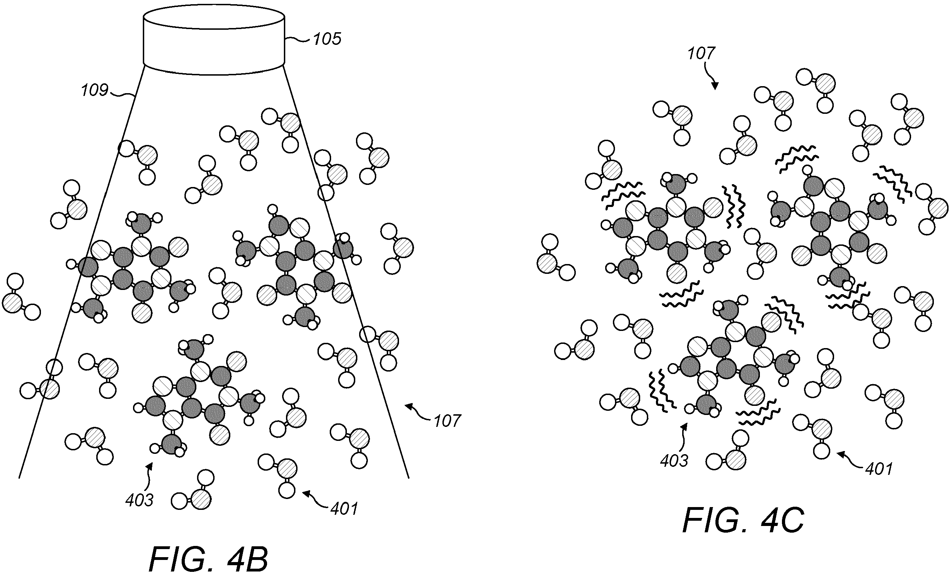

In Fig. 4B the sample 107 is excited using pulses of light 109 from a tunable light source 103. In this example the pulse of light 109 could be in the infra-red range.

The excitation of the sample 107 causes vibration of the molecules in the sample 107. Different frequencies of pulses of light 109 will cause excitation of different molecules in the sample 107. For example, a first frequency of the pulses of light 109 would cause the water molecules to vibrate and a second frequency of the pulses of light 109 would cause the caffeine molecules 403 to vibrate.

Fig. 4C shows the vibration of the caffeine molecules 403. This vibration creates a deformation on the surface of the sample 107. The water molecules 401 as shown in Fig. 4C have not been excited. In other examples pulses of light 109 of a different wavelength could be used to cause excitation of the water molecules 401. This could cause a different surface deformation to the excitation of the caffeine molecules. The types of molecules in the sample 107 can be identified by analysing the surface deformations and the frequency of the pulses of light 109 at which they occur.

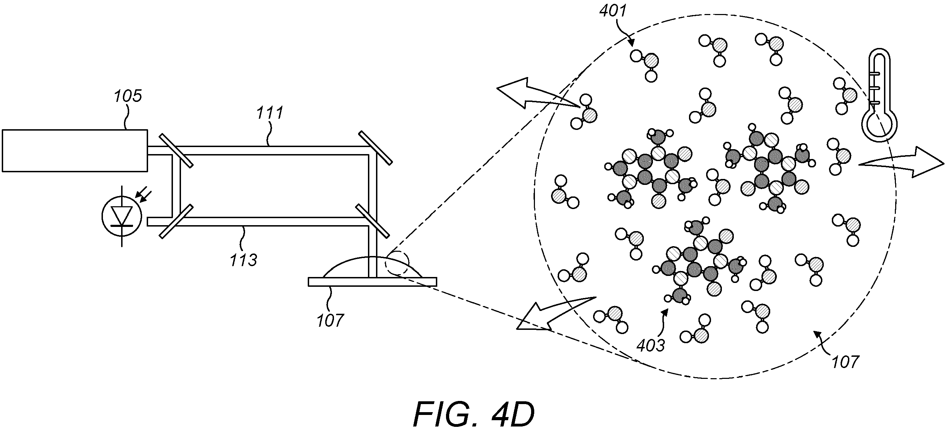

The surface deformation of the sample 107 caused by the vibration of the caffeine molecules 403 can be detected using a LiDAR device 105. Fig. 4D shows an example LiDAR device 105 being used to detect the surface deformations.

The LiDAR device 105 is configured so that the LiDAR signals 111 that are transmitted by the LiDAR device 105 are incident on the sample 107. The reflected LiDAR signals 113 from the sample 107 can be detected by the LiDAR device 105. The reflected LiDAR signals 113 comprise information indicative of the surface deformation.

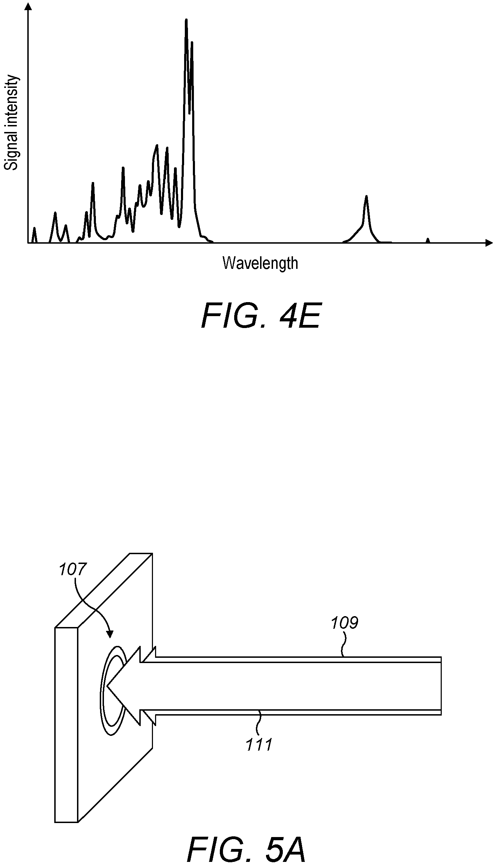

Fig. 4E shows a plot of an example reflected LiDAR signal 113 that could be detected by the LiDAR device 105. Fig. 4E shows a plot of signal intensity on the y axis against wavelength of the pulses of light 109 on the x axis. This signal can be processed to identify phase changes or other information that indicates the size of the surface deformation.

Figs. 5A to 5C show an example apparatus 101 in use.

Fig. 5A shows an example sample 107. The sample 107 could be any suitable type of sample 107. The sample 107 is positioned relative to an apparatus 101 so that pulses of light 109 from the tunable light source 103 and LiDAR signals 111 from the LiDAR device 105 are incident on the same region of the sample 107. This enables the LiDAR signals 111 to be used to probe the surface of the sample 107.

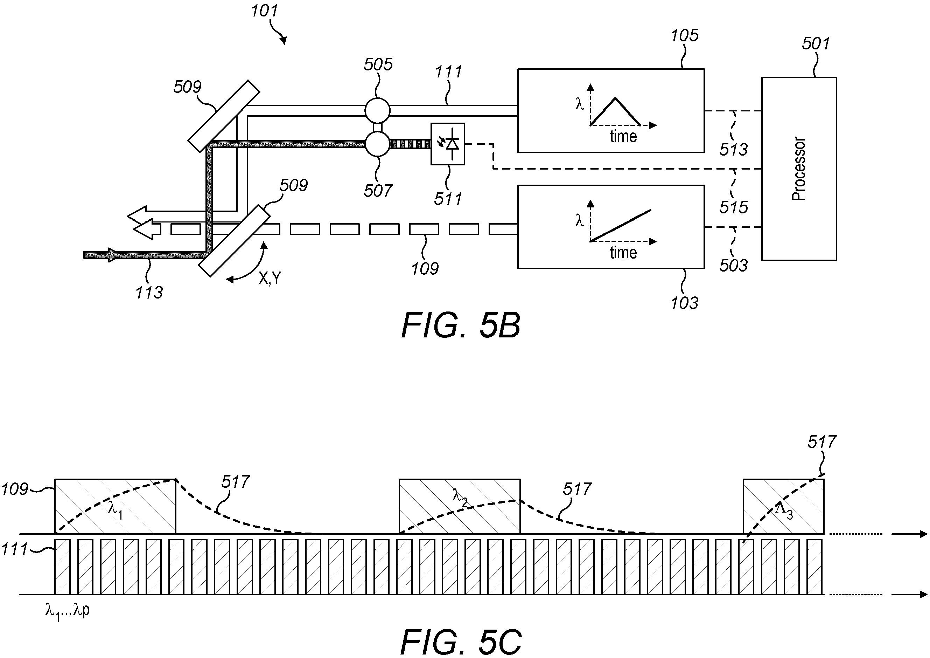

Fig. 5B schematically shows an apparatus 101 that can be used to analyse the sample 107. The apparatus 101 comprises a LiDAR device 105 and a tunable light source 103. The LiDAR device 105 and the tunable light source 103 could be as described previously or could be any other suitable type of LiDAR device 105 or tunable light source 103. The apparatus 101 also comprises a processor 501. The apparatus 101 could comprise other components that are not illustrated in the example of Fig. 5B.

The tunable light source 103 is configured to provide the pulses of light 109 to excite the sample 107. The tunable light source 103 can be tuned to provide the pulses of light 109 at different wavelengths at different times. In the example of Fig. 5B the tunable light source 103 is tuned so that the wavelength of the pulses of light 109 increase linearly over a period of time. Other patterns for tuning the wavelength of the pulses of light 109 can be used in other examples.

The tunable light source 103 is configured to provide an input signal 503 to the processor 501. The input signal provided by the tunable light source 103 can provide information relating to the wavelength of pulses of light 109 and the time at which the pulses of light 109 at the respective wavelengths were transmitted.

The LiDAR device 105 is configured to provide the LiDAR signal 111. The LiDAR device 105 is configured so that the LiDAR signal 111 is incident on the area of the sample 107 that has been excited by the pulses of light 109 as shown in Fig. 5A.

The LiDAR device 105 is configured to provide the LiDAR signal 111 at different wavelengths at different times. In the example of Fig. 5B the LiDAR device 105 is controlled so that the wavelength of the LiDAR signal 111 increases linearly over a first period of time and then decreases over a second period of time. The first period of time and the second period of time can be the same length. Other patterns for tuning the wavelength of the LiDAR signals 111 can be used in other examples.

As shown in Fig. 5B the LiDAR device 105 comprises a beam splitter 505. The beam splitter 505 is configured to separate the LiDAR signal 111 into a first portion and a second portion. The first portion is transmitted to the sample 107 and the second portion is provided to a mixer 507 to enable the second portion to be mixed with reflected LiDAR signals 113.

The LiDAR device 105 can also comprise one or more optical components 509. The optical components can be configured to direct the LiDAR signals 111 and the reflected LiDAR signals 113 in the appropriate directions. The optical components can comprise any means for directing the respective signals. In the example of Fig. 5B the optical components comprise a first mirror and a second mirror. In this example the second mirror is adjustable. This second mirror is adjustable in that it can be moved relative to the first mirror and the source of the LiDAR signals 111. In this example the second mirror can be moved in an x-y plane where the plane is defined relative to the direction of the incident LiDAR signals 111. The adjustable mirror can enable the LiDAR signals 111 to be incident on different parts of the sample 107. In some examples the adjustable mirror can enable the LiDAR signals to be scanned over the surface of the sample 107.

The mixer 507 is configured to combine the LiDAR signals 111 and the reflected LiDAR signals 113. This causes interference of the respective signals. The LiDAR device 105 also comprises a detector 511. The detector 511 can comprise one or more sensors configured to detect the combined signals. The intensity of the detected signals indicates whether the interference between the respective signals has been destructive of constructive. This interferogram can give an indication of the surface deformations caused by the incident pulses of light 109.

The LiDAR device 105 is configured provide input signals 513, 515 to the processor 501. In the example of Fig. 5B the LiDAR device 105 is configured to provide a first input signal 513. The first input signal 513 can provide information relating to the wavelength of LiDAR signals 111 and the time at which the LiDAR signals 111 at the respective wavelengths were transmitted. The second input signal 515 can provide information relating to the signals detected by the detector 511. The second input signals 515 can provide an indication of the interference between the LiDAR signals 111 and the reflected LiDAR signals 113.

The respective input signals 503, 513, 515 that are provided to the processor 501 can be used to detect the surface deformation of the sample 107 and make inferences of the material composition of the sample 107. Any suitable means or processes can be used by the processor to detect the surface deformation of the sample 107 and make inferences of the material composition of the sample 107.

Fig. 5C schematically shows the pulses of light 109 and LiDAR signals 111.

The pulses of light 109 can be provided at a uniform intensity for a given duration of time. In the example of Fig. 5C the respective pulses of light 109 have the same intensity and last for the same duration of time.

The respective pulses of light are provided at different wavelengths. In the example of Fig. 5C the first pulse is provided at a first wavelength λ₁, the second pulse is provided at a second wavelength λ₂ and the third pulse is provided at a third wavelength λ₃. Any number of pulses of light 109 at different wavelengths can be used to excite the samples 107 in examples of the disclosure.

The pulses of light 109 cause localized heating of the sample 107. This is indicated by the dashed lines 517 in Fig. 5C. The temperature of the sample 107 is dependent upon the wavelength of the pulse of light. In the example of Fig. 5C the third pulse causes a higher level of heating than either the first pulse or the second pulse.

A time gap is provided between the respective pulses of light 109. In examples of the disclosure an equal time gap can be provided between consecutive pulses of light 109. In other examples the time gaps between consecutive pulses of light 109 might not be the same so that different time gaps could be used. The pulses of light 109 can be modulated periodically, non-periodically patterned modulations or pseudo random patterns. The modulation and/or patterns of the pulse of light 109 can be configured to enable multiplexing of composition information. The time gap between consecutive pulses of light 109 can be long enough to enable cooling of the sample 107 between the transmission of the pulses of light.

The LiDAR signals 111 comprises short pulses of light provided at different wavelengths. The pulses of the LiDAR signals 111 can be short compared to the pulses of the pulses of light 109 from the tunable light source 103. The gaps between the consecutive pulses in the LiDAR signals 111 can be short compared to the gaps between the pulses of light 109 from the tunable light source 103.

The pulses of light 109 and the LiDAR signals 111 can be scanned over the surface of the sample 107 to enable different parts of the surface of the sample 107 to be analysed. The scanning of the surface of the sample 107 can be achieved by moving the positions of the pulses of light 109 and the LiDAR signals 111.

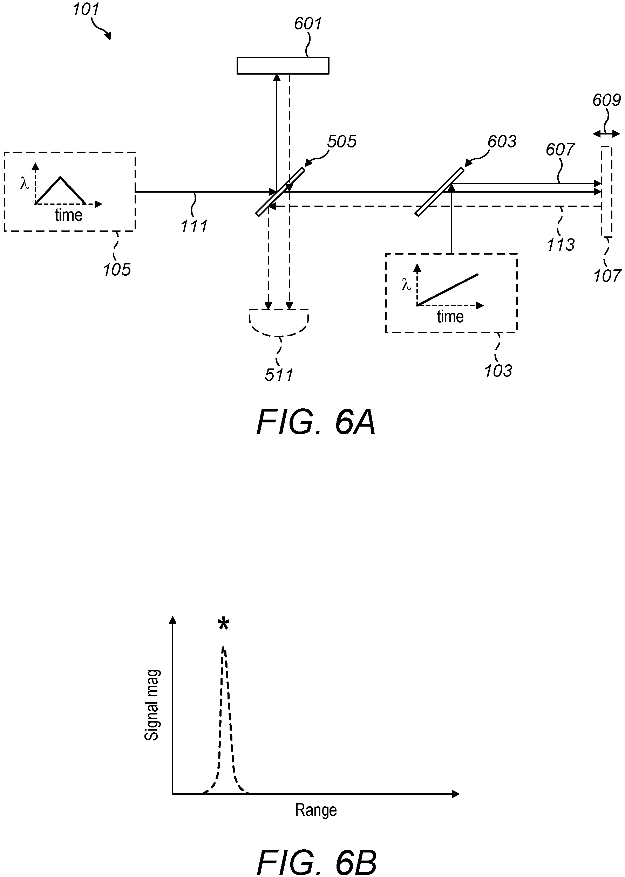

Figs. 6A to 6E shows an example apparatus 101 and outputs.

Fig. 6A schematically shows an arrangement for an apparatus 101. The apparatus 101 comprises a LiDAR device 105, a beam splitter 505, a static reference mirror 601, a detector 511, and a dichroic mirror 603.

The LiDAR device 105 provides LiDAR signals 111 at any suitable wavelength or range of wavelengths. The wavelength that is used for the LiDAR signals 111 can depend on the type of sample 107 that is to be analysed or any other suitable factor.

The LiDAR device 105 can be an FMCW LiDAR device or any other suitable type of LiDAR device. The LIDAR device 105 can be configured to enable very small changes in the surface of the sample 107 to be detected. The very small changes can be very small compared to the distance between the apparatus 101 and the sample 107. The very small changes could be on a molecular scale. The very small changes could be in the range of nanometers.

To detect the small changes in the sample 107 the LiDAR device 105 can be configured to operate with a phase-stable chirp. The chirp can be a short pulse of the LiDAR signals 111. The LiDAR device 105 can comprise any suitable means to stabilize the phase of the LiDAR signals 111 such as tuning of a Bragg reflector or ring resonator, programmable laser cavity phase shifting, a fiber Bragg grating, a Fabry-Perot resonator, a Mach-Zehnder interferometer, or any other suitable means. The phase stabilization is configured so that the expected time-phase behaviour of the LiDAR signals 111 is known.

The apparatus 101 is configured so that the LiDAR signals 111 are incident on the beam splitter 505. The beam splitter 505 can comprise a prism, a half-silvered mirror or any other suitable component.

In the example apparatus 101 a first portion of the split beam provides a reference beam and is provided to the static reference mirror 601. A second portion of the split beam is provided to the sample 107. The reflected LiDAR signals 113 from the sample and the reflected LiDAR signals 607 from the static reference mirror 601 can be detected by the detector 511. The interference between the reflected LiDAR signals 113 from the sample 107 and the reflected LiDAR signals 607 from the static reference mirror 601 gives an indication of phase changes caused by the surface deformations of the sample 107 for the reflected LiDAR signals 113 from the sample 107. This can give an indication of any surface deformation of the sample 107.

The apparatus 101 is configured so that the pulses of light 109 from the tunable light source 103 are incident on the dichroic mirror 603. The dichroic mirror 603 is configured so that the pulses of light 109 are directed towards the sample 109 but allows the reflected LiDAR signals 113 from the sample 107 to pass through. The pulses of light cause localized heating and surface deformation of the sample 107.

The surface deformation of the sample 107 is indicated by the arrow 609. The surface deformation can be localized so that it only occurs in the area of the surface upon which the pulses of light 109 have been incident. The surface deformation 109 is temporary so that when the sample 107 has cooled the surface returns to the original state.

The pulses of light 109 cause localized heating and molecular scale surface deformations of the sample 107. The molecular scale surface deformations of the sample 107 affect the phase in the reflected LiDAR signals 113 and these changes can be detected by the apparatus 101.

The apparatus 101 can be configured to obtain information about the range and/or velocity of the sample 107 and also the material composition of the sample 107. The velocity of the sample can comprise the speed of the sample 107 and also the direction of motion.

Information about the range of the sample 101 can be obtained from a scan or sweep of the LiDAR device 105. Fig. 6B shows an example output from a scan or sweep of the LiDAR device 105. In this example the scan has been made at a frequency of around 100 kHz.

The plot in Fig. 6B shows magnitude of the reflected LiDAR signals 113 on the y axis and range on the x axis. This shows a clear peak at a particular range and indicates that the sample 107 is positioned at that range.

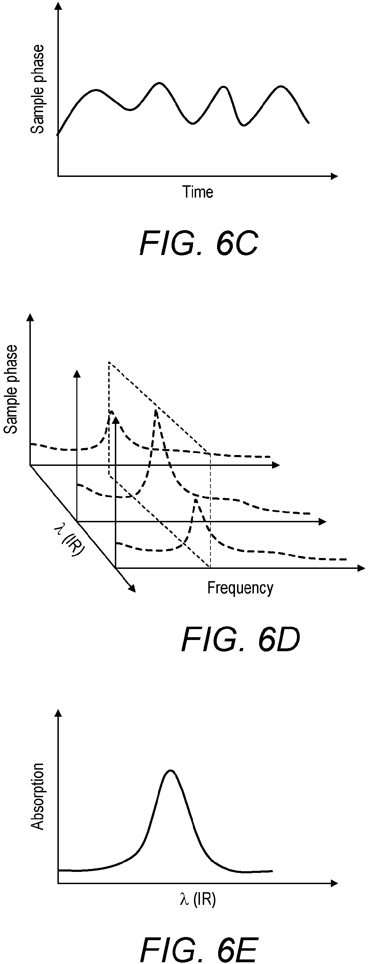

Information about the surface deformation of the sample 107 can be obtained from the same scan that is used to determine the range and/or velocity of the sample 107. For instance, the molecular scale changes can be detected by averaging the detected LiDAR signals over a time interval. The time interval could be of the order of several milliseconds. In the example of Fig. 6C the molecular scale changes are detected from changes in the phase of the reflected LiDAR signals 113. The plot in Fig. 6C shows phase on the y axis and time on the x axis. This shows a clear variation in phase over time.

The phase tracking signals as shown in Fig. 6C can be converted from the time domain to a frequency domain. Any suitable means can be used to convert the phase signals from the time domain to a frequency domain. For example, a Fast Fourier Transform (FFT) or any other suitable transformation could be used.

Fig. 6D shows plots of the phase signals of Fig. 6C converted to a frequency domain. The plot in Fig. 6D shows phase on the y axis and frequency on the x axis for three different wavelengths of the pulses of light 109. This shows a clear peak in phase changes at specific frequencies. The different wavelengths can show peaks at different frequencies. This shows information about the different surface deformations.

A plurality of different wavelengths of the pulses of light 109 are shown in Fig. 6D On the z axis. The example of Fig. 6D shows an infrared range. Other wavelength ranges could be used in other examples. Three different wavelengths are shown in Fig. 6D however any number of different wavelengths could be used in examples of the disclosure.

The magnitude of the changes in the phase gives an indication of the absorption of the pulses of light 109 at the respective wavelengths. Fig. 6E shows a plot of the absorption of the pulses of light 109 at the respective wavelengths. This can be used to infer information about the material composition of the sample 107.

Examples of the disclosure therefore provide an apparatus 101 that uses LiDAR to detect both the distance to a sample 107 (and/or velocity of the sample107) and also infer information about the material composition of the sample 107. The apparatus 101 can enable the information about the material composition of the sample 107 to be obtained cheaply and quickly compared to methods that could involve analysing the sample in laboratory or other similar processes.

The apparatus 101 can be configured to be sensitive enough to detect the surface deformations, and so enable the material composition to be inferred, from a long range. The long range can be over ten meters between the sample 107 and the apparatus 101. This can enable samples 107 to be analysed without having to get an apparatus 101 close to the sample 107. This could be useful in a wide range of applications.

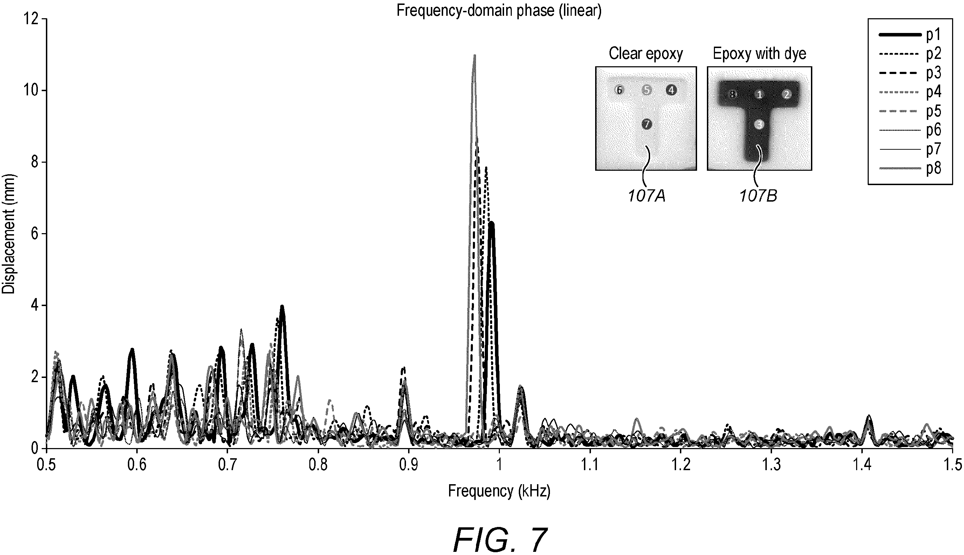

Fig. 7 shows results obtained using examples of the disclosure.

These results were obtained using a near infra-red (NIR) laser as the tunable light source 103. This was used to differentiate between two samples. A first sample 107A was a clear epoxy that did not contain any dye. The second sample 107B was an epoxy that contained some NIR absorbing dye. To obtain the results shown in Fig. 7 the samples 107A, 107B were each 2cm by 2cm in size, arranged side-by-side to form an approximate 2cm by 4cm area, and were placed at a distance of around 10cm from the apparatus 101.

As shown in Fig. 7 when the pulses of light 109 are modulated at around 1kHz, the reflected LiDAR signals 113 were observed with a phase modulation at the same frequency.

The different signal traces p1-p8 in the plot correspond to different locations on the respective sample. The signals were obtained by translating a motor stage by a fixed amount and repeating the LiDAR scans at the different positions. The eight-point coarse scan of the sample took around one second The signals were digitally filtered at around 1 kHz to obtain information about the surface deformations resulting from the localised heating.

These tests enabled changes of the order of 200 picometer to be resolved when the sample 107 was around 30 cm away from the apparatus 101.

Fig. 8 schematically illustrates a controller 801. The controller 801 can be a chip or a chip-set. The controller 801 can be configured to control an apparatus 101 such as the apparatus 101 shown in Fig. 1. In some examples the controller 801 can be provided within a communications device or any other suitable type of device.

In the example of Fig. 8 the implementation of the controller 801 can be as controller circuitry. In some examples the controller 801 can be implemented in hardware alone, have certain aspects in software including firmware alone or can be a combination of hardware and software (including firmware).

As illustrated in Fig. 8 the controller 801 can be implemented using instructions that enable hardware functionality, for example, by using executable instructions of a computer program 807 in a general-purpose or special-purpose processor 501 that can be stored on a computer readable storage medium (disk, memory etc.) to be executed by such a processor 501.

The processor 501 is configured to read from and write to the memory 805. The processor 501 can also comprise an output interface via which data and/or commands are output by the processor 501 and an input interface via which data and/or commands are input to the processor 501.

The memory 805 is configured to store a computer program 807 comprising computer program instructions (computer program code 809) that controls the operation of the controller 801 when loaded into the processor 501. The computer program instructions, of the computer program 807, provide the logic and routines that enables the controller 801 to perform the methods illustrated in Fig. 2 The processor 501 by reading the memory 805 is able to load and execute the computer program 807.

The controller 801 therefore comprises: at least one processor 501; and at least one memory 805 including computer program code 809, the at least one memory 805 storing instructions 809 that, when executed by the at least one processor 501, cause an apparatus 101 at least to perform:
controlling 201 a tunable light source to provide pulses of light to excite a sample so as to cause surface deformation of, at least part of, a surface of the sample;
controlling 203 a LiDAR device to provide LiDAR signals and detect a distance between the apparatus and the surface of the sample;
detecting 205 the surface deformation caused by the tunable light source from LiDAR signals that are reflected from the surface of the sample; and
enabling 207 the detected surface deformation to be used to infer a material composition of at least a part of the surface of the sample.

As illustrated in Fig. 8 the computer program 807 can arrive at the controller 801 via any suitable delivery mechanism 803. The delivery mechanism 803 can be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 807. The delivery mechanism can be a signal configured to reliably transfer the computer program 807. The controller 801 can propagate or transmit the computer program 807 as a computer data signal. In some examples the computer program 807 can be transmitted to the controller 801 using a wireless protocol such as Bluetooth, Bluetooth Low Energy, Bluetooth Smart, 6LoWPan (IPᵥ6 over low power personal area networks) ZigBee, ANT+, near field communication (NFC), Radio frequency identification, wireless local area network (wireless LAN) or any other suitable protocol.

The computer program 807 comprises computer program instructions for causing an apparatus 101 to perform at least the following:
controlling 201 a tunable light source to provide pulses of light to excite a sample so as to cause surface deformation of, at least part of, a surface of the sample;
controlling 203 a LiDAR device to provide LiDAR signals and detect a distance between the apparatus and the surface of the sample;
detecting 205 the surface deformation caused by the tunable light source from LiDAR signals that are reflected from the surface of the sample; and
enabling 207 the detected surface deformation to be used to infer a material composition of at least a part of the surface of the sample.

The computer program instructions can be comprised in a computer program 807, a non-transitory computer readable medium, a computer program product, a machine readable medium. In some but not necessarily all examples, the computer program instructions can be distributed over more than one computer program 807.

Although the memory 805 is illustrated as a single component/circuitry it can be implemented as one or more separate components/circuitry some or all of which can be integrated/removable and/or can provide permanent/semi-permanent/ dynamic/cached storage.

Although the processor 501 is illustrated as a single component/circuitry it can be implemented as one or more separate components/circuitry some or all of which can be integrated/removable. The processor 501 can be a single core or multi-core processor.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" can refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software can not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in Fig. 2 can represent steps in a method and/or sections of code in the computer program 807. The illustration of a particular order to the blocks does not necessarily imply that there is a required or preferred order for the blocks and the order and arrangement of the blocks can be varied. Furthermore, it can be possible for some blocks to be omitted.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising:
a tunable light source configured to provide pulses of light for exciting a sample so as to cause surface deformation of, at least part of, a surface of the sample;
a LiDAR device configured to provide LiDAR signals and detect a distance between the apparatus and the surface of the sample; and
wherein the LiDAR device is configured to detect the surface deformation caused by the tunable light source from LiDAR signals that are reflected from the surface of the sample and wherein the apparatus enables the detected surface deformation to be used to infer a material composition of at least a part of the surface of the sample.

2. An apparatus as claimed in claim 1 wherein the LiDAR device is configured to simultaneously detect the distance between the apparatus and the surface of the apparatus and the surface deformation.

3. An apparatus as claimed in any preceding claim wherein the LiDAR device comprises an interferometric assembly configured to detect surface deformation from a relative phase shift of LiDAR signals that are reflected from the surface of the sample.

4. An apparatus as claimed in claim 3 wherein the apparatus is configured to enable a modulation frequency of the tunable light source to be used to filter relative phase shifts in the LiDAR signals that are reflected from the surface of the sample.

5. An apparatus as claimed in any preceding claim wherein phase stabilization of the LiDAR device is achieved using one or more of:
tuning of a Bragg reflector or ring resonator,
programmable laser cavity phase shifting,
a fiber Bragg grating,
a Fabry-Perot resonator,
a Mach-Zehnder interferometer.

6. An apparatus as claimed in any of claims 1 to 2 wherein the LiDAR device comprises an interferometric assembly configured to detect surface deformation from speckle modulations in light intensity reflected from the sample.

7. An apparatus as claimed in any preceding claim wherein the LiDAR device is configured to provide time-multiplexed signals for detecting the distance between the apparatus and the surface of the sample and the surface deformation.

8. An apparatus as claimed in any preceding claim wherein the LiDAR device comprises a frequency modulated continuous wave LiDAR device.

9. An apparatus as claimed in any preceding claim wherein the tunable light source is configured to provide infra-red light.

10. An apparatus as claimed in any preceding claim wherein the tunable light source comprises a quantum cascade laser.

11. An apparatus as claimed in any preceding claim wherein the tunable light source is configured for photothermal absorption by the surface of the sample.

12. An apparatus as claimed in any preceding claim wherein the pulses of light are timed so as to allow thermal expansion and contraction of the surface of the sample between consecutive pulses of the tunable light source.

13. An apparatus as claimed in any preceding claim comprising means for converting detected LiDAR signals from a time domain to a frequency domain to detect the surface deformation.

14. A method comprising:
controlling a tunable light source to provide pulses of light to excite a sample so as to cause surface deformation of, at least part of, a surface of the sample;
controlling a LiDAR device to provide LiDAR signals and detect a distance between the apparatus and the surface of the sample;
detecting the surface deformation caused by the tunable light source from LiDAR signals that are reflected from the surface of the sample; and
enabling the detected surface deformation to be used to infer a material composition of at least a part of the surface of the sample.

15. A computer program comprising computer program instructions that, when executed by processing circuitry, cause:
controlling a tunable light source to provide pulses of light to excite a sample so as to cause surface deformation of, at least part of, a surface of the sample;
controlling a LiDAR device to provide LiDAR signals and detect a distance between the apparatus and the surface of the sample;
detecting the surface deformation caused by the tunable light source from LiDAR signals that are reflected from the surface of the sample; and
enabling the detected surface deformation to be used to infer a material composition of at least a part of the surface of the sample.
